# EUROPEAN PATENT APPLICATION

(11) **EP 4 198 344 A1**
(43) Date of publication of application: **21.06.2023**
(21) Application number: 21216147.5
(22) Date of filing: 20.12.2021
(51) Int. Cl.: F16H 3/54

(54) **ELECTRIC GEAR DRIVE WITH IMPROVED TWO-SPEED GEARBOX AND VEHICLE WITH SUCH A GEAR DRIVE**

(71) Applicant: Valeo eAutomotive Germany GmbH, 91056 Erlangen (DE)
(72) Inventor: Lewandowski, Marek, 91056 Erlangen (DE)
(74) Representative: Valeo Powertrain Systems

(57) **Abstract**

An electric gear drive (1) is proposed, which comprises a two-speed gearbox (2) and an electric motor (3) coupled to a gear input of the gearbox (2). The gearbox (2) provides a first transmission ratio between the gear input and a gear output of the gearbox (2) in a first gear and a second transmission ratio between the gear input and the gear output in a second gear, wherein provided the same rotation speed at the gear input, the first transmission ratio provides a lower rotation speed at the gear output than the second transmission ratio. First gear wheel toothings (C, D, E), which are engaged and relatively rotate to each other only in first gear, are designed for a lower lifetime than other, second gear wheel toothings (A, B) of the gearbox (2). Moreover, a vehicle (27) with such an electric gear drive (1) is disclosed.

## Description

### TECHNICAL FIELD

The invention relates to an electric gear drive, which comprises a two-speed gearbox and an electric motor coupled to a gear input of the gearbox. The gearbox provides a first transmission ratio between the gear input and a gear output of the gearbox in a first gear (or a first switching state) and a second transmission ratio between the gear input and the gear output in a second gear (or a second switching state), wherein provided the same rotation speed at the gear input, the first transmission ratio provides a lower rotation speed at the gear output than the second transmission ratio. Moreover, the invention relates to a vehicle having at least two axles, at least one of which is driven at least partially or intermittently by the electric gear drive of the above kind.

### BACKGROUND ART

An electric gear drive and a vehicle of the above kind generally are known in prior art. Typically, a single-speed gearbox is used to adapt a rotational speed or torque of the electric motor to a desired rotational speed or torque needed at the vehicle's wheels. The torque of an electric motor is sufficient then to drive cars under normal conditions. In case of heavy duty vehicles like trucks the situation is worse because a lot of torque is needed when a heavy truck drives off, in particular under heavy conditions like driving off uphill or out of mud. The vehicle's gear must be designed for this torque which is then bulky and expensive.

### DISCLOSURE OF INVENTION

An object of the invention is to provide an improved electric gear drive and an improved electric vehicle. In particular, a solution shall be proposed, which provides the torque needed for driving off, in particular under heavy conditions like driving off uphill or out of mud, but which is less bulky and cheaper compared to prior art solutions.

The object of the invention is solved by an electric gear drive as disclosed in the opening paragraph, wherein first gear wheel toothings, which are engaged and relatively rotate to each other only in first gear (or the first switching state), are designed for a lower lifetime than other, second gear wheel toothings of the gearbox. In particular, the first gear wheel toothings can be designed for a lifetime of less than 50 operating hours (whereas the second gear wheel toothings can be designed for a substantially longer time, which typically is > 2000 operating hours).

Moreover, the object of the invention is solved by a vehicle having at least two axles, at least one of which is driven at least partially or intermittently by the electric gear drive of the above kind.

The proposed solution offers the advantage, that a first gear for driving off is provided and a second gear is provided for standard operation of the vehicle. The first gear can be used when the vehicle drives off under heavy conditions, e.g. uphill or out of mud. To keep the technical effort for the gear drive and the costs as low as possible, the first gear wheel toothings, which are engaged and relatively rotate to each other only in first gear (or the first switching state), are designed for a lower lifetime than other, second gear wheel toothings of the gearbox. That means that both the first gear wheel toothings as well as the second gear wheel toothings can be made comparably "fragile". The first reason is that the first gear wheel toothings do not need to last very long. The second reason is that parts, which are in operation only in second gear, do not need to carry the high torque for driving off the vehicle. In the end, the gearbox is less bulky and less expensive than prior art solutions.

Further advantageous embodiments are disclosed in the claims and in the description as well as in the figures.

Advantageously, the first gear wheel toothings can be straight toothed and the second gear wheel toothings can be helical toothed. Accordingly, the production of the first gear wheel toothings is technically less complex and cheaper than production of the second gear wheel toothings. Thus, the overall costs for the gear box are reduced with just minor influence on the function of the gearbox. In detail, the gearbox may be louder for very short times, i.e. in first gear.

In another advantageous embodiment, first gear wheels with a first gear wheel toothing, which only rotate relatively to each other in first gear, are supported by friction bearings and other, second gear wheels of the gearbox are supported by rolling bearings. Because there is no relative rotation between first gear wheels in second gear, friction bearings are considered to be sufficient for lifetime of the gear drive or the vehicle (typically > 2000 operating hours).

Beneficially, the two-speed gearbox is non-synchronized. In this way, technical complexity of the gearbox can be kept low what improves reliability of the gearbox.

In yet another beneficial embodiment, the first gear (or the first switching state) can only be engaged when the electric motor is stopped. Hence, technical complexity of the gearbox can be reduced even further what improves reliability of the gearbox even more.

Advantageously, the gearbox comprises a planetary gear. In this way, the gearbox can be made very compact. In detail, the planetary gear can be integrated within a space, which was needed by a gear wheel of the gearbox anyway. For example, a pinion driven by the electric motor can engage with an outer toothing of a ring gear of the planetary gear providing the same transmission ratio as the replaced gear wheel.

It is particularly advantageous if
- a pinion driven by the electric motor engages with an outer toothing of a ring gear of the planetary gear,
- an output of the gearbox is driven by a planet carrier of the planetary gear,
- planet gears rotatably mounted on the planet carrier engage with an inner toothing of the ring gear and a sun gear of the planetary gear, and
- switching means enable rotation of planet gears around their axes in first gear (or the first switching state) and interlock the sun gear, the planet gears and the ring gear in second gear (or the second switching state).

Hence, the planetary gear acts like a rigid gear wheel having the same toothing as the outer toothing of a ring gear of the planetary gear in second gear. In contrast, in first gear, the ring gear, the planet carrier, the planet gears and the sun gear rotate relatively to each other and provide a transmission ratio, which is lower than the transmission ratio between the pinion and the outer toothing of the ring gear of the planetary gear. In turn, this first gear can be used when the vehicle drives off under heavy conditions. Although the use of a planetary gear for the given object is advantageous, other gears may be used in this context as well, e.g. two-shaft gearboxes.

Advantageously, the switching means can comprise a form fit clutch coupling or decoupling the sun gear to the planet carrier and a friction clutch coupling or decoupling the sun gear to the housing of the gearbox, wherein the friction clutch is engaged and the form fit clutch is disengaged in first gear and wherein the friction clutch is disengaged and the form fit clutch is engaged in second gear. In particular, the friction clutch may comprise a friction pad fixed to the housing of the gearbox, onto which the sun gear is pressed in first gear. Alternatively, is also possible that coupling of the sun gear to the planet carrier is done by means of a friction clutch and coupling the sun gear to the housing of the gearbox is done by a form fit clutch. Moreover, it is possible that both coupling of the sun gear to the planet carrier and coupling the sun gear to the housing of the gearbox is done by form fit clutches or friction clutches. By the proposed measures, switching from the first gear to the second gear can easily be done.

Beneficially, the form fit clutch is embodied as a dog clutch or as a combination of a spline shaft with a movable spline ring. In this way, proven means are used to perform the coupling or decoupling.

In yet another beneficial embodiment, the planet carrier of the planetary gear can be fixed to a pinion which engages with a differential gear. In this way, a very compact electric gear drive for an electric vehicle is provided.

### BRIEF DESCRIPTION OF DRAWINGS

The invention now is described in more detail hereinafter with reference to particular embodiments, which the invention however is not limited to.
- Fig. 1: a schematic cross sectional view of an exemplary electric gear drive and
- Fig. 2: shows a schematic view of an electric vehicle.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

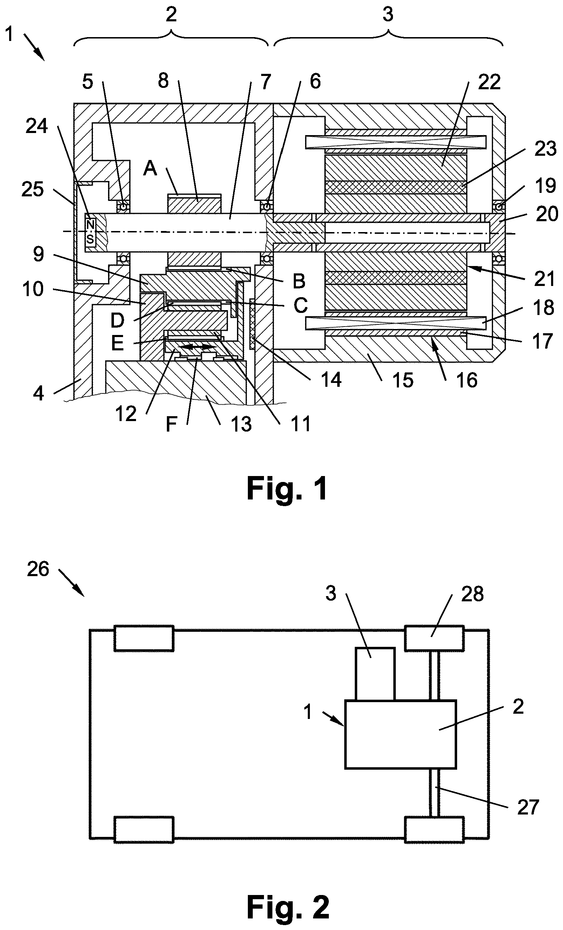

Fig. 1 shows a schematic cross sectional view of an exemplary gear drive 1, which comprises a gearbox 2 and an electric motor 3 coupled thereto.

The gearbox 2 comprises a housing 4, two bearings 5 and 6 arranged in the housing 4, an input shaft 7 supported by the bearings 5 and 6, as well as a pinion 8 mounted on the input shaft 7. Moreover, in this example, the gearbox 2 comprises a planetary gear with a ring gear 9, a planet carrier 10, planet gears 11 rotatably mounted on the planet carrier 10 and a sun gear 12. The planet carrier 10 is mounted on a bushing 13, which is mounted to a further shaft of the gearbox 2 (not shown). Moreover, the gearbox 2 comprises a friction pad 14 mounted to the housing 4 of the gearbox 2.

The electric motor 3 comprises a housing 15, a stator 16 arranged in the housing 15, wherein the stator 16 comprises a stator lamination stack 17 with stator windings 18 arranged therein, a bearing 19, a rotor shaft 20 supported by the bearing 19 and the input shaft 7 of the gearbox 2 and a rotor 21 mounted on the rotor shaft 20, wherein the rotor 21 comprises a rotor lamination stack 22 with rotor magnets 23 arranged therein.

In the example of Fig. 1, the rotor 21 is coupled to the input shaft 7 of the gearbox 2 via the rotor shaft 20 at a first side of the input shaft 7. However, in another embodiment, the input shaft 7 may be longer, and the rotor 21 may be mounted on the input shaft 7.

In addition, the gear drive 1 (in detail the gearbox 2) comprises an optional position indicator 24, which is designed to indicate an angular position of the rotor 21 and which is mounted on the input shaft 7 of the gearbox 2 at a second side vis-à-vis of the first side on the input shaft 7, i.e. vis-à-vis of the electric motor 3.

In this example, the position indicator 24 is embodied as a magnet and covered by a cap 25 made of plastic, which seals the housing 4 of the gearbox 2. Although this is an advantageous solution, the position indicator 24 may also embodied in another way, and the cap 25 may be made of a different material, for example of stainless steel or aluminum. A position sensor (not shown in Fig. 1) can be arranged outside of the cap 25 and can be designed to detect the angular position of the rotor 21 based on the angular position of the position indicator 24.

In addition, Fig. 2 shows an electric vehicle 26, which comprises the gear drive 1 with a gearbox 2 and an electric motor 3 as outlined above. The gear drive 1 is mechanically coupled to wheels 28 of the electric vehicle 26 by means of side shafts 27. The electric motor 3 may be provided for powering the electric vehicle 26 permanently in a pure electric car or intermittently, e.g. in combination with a combustion engine in a hybrid car.

The function of the two-speed planetary gear now is as follows:
Generally, the gearbox 2 provides a first transmission ratio between the gear input and a gear output of the gearbox 2 in a first gear (or a first switching state) and a second transmission ratio between the gear input and the gear output in a second gear (or a second switching state), wherein provided the same rotation speed at the gear input, the first transmission ratio provides a lower rotation speed at the gear output than the second transmission ratio. In this example, the gear input is the input shaft 7. The gear output can be a shaft, which the bushing 13 is mounted to. The planet carrier 10 can also be fixed to a pinion which engages with a differential gear (not shown in Fig. 1) forming the output stage of the gearbox 2.

Generally, the pinion 8 driven by the electric motor 3 (in detail its toothing A) engages with an outer toothing B of the ring gear 9 of the planetary gear. The planet gears 11 (in detail their toothings D) engage with an inner toothing C of the ring gear 9 and a toothing E of the sun gear 12.

The planetary gear moreover comprises switching means, which enable rotation of planet gears 11 around their axes in first gear (or the first switching state) and interlock the sun gear 12, the planet gears 11 and the ring gear 9 in second gear (or the second switching state).

In this example, the switching means are embodied as a form fit clutch F, which comprises an outer spline profile on the bushing 13 and an inner spline profile on the sun gear 12. As indicated by arrows, the sun gear 12 is movable in axial direction. Fig. 1 reflects the situation in second gear (or the second switching state). In Fig. 1 the sun gear 12 is in its left position so as to couple the sun gear 12 to the planet carrier 10 by means of the form fit clutch F. In detail, this position of the sun gear 12 hinders rotation of the planet gears 11 around their axes and thus not only interlocks the sun gear 12 and the planet gears 11 but also the planet gears 11 to the ring gear 9. As a result, the ring gear 9 the planet carrier 10 and the sun gear 12 are coupled to each other in a torque stiff manner and can only rotate with the same speed.

In first gear (or the first switching state), the sun gear 12 is moved to the right and touches the friction pad 14 there. Accordingly, a rotation of the sun gear 12 is hindered. At the same time, the interlock between the planet carrier 10 and the sun gear 12 is released. Accordingly, the planet gears 11 can rotate around their axes, and a rotation of the ring gear 9 causes a slower rotation of the planet carrier 10 according to the chosen transmission ratio.

In summary, the switching means comprise a form fit clutch F coupling or decoupling the sun gear 12 to the planet carrier 10 and a friction clutch coupling or decoupling the sun gear 12 to the housing 4 of the gearbox 2 (via the friction pad 14 in this embodiment), wherein the friction clutch is engaged and the form fit clutch is disengaged in first gear and wherein the friction clutch is disengaged and the form fit clutch is engaged in second gear.

In this example, the form fit clutch is embodied as a combination of an inner spline profile and an outer spline profile, but the form fit clutch may equally be embodied as a dog clutch. It is also possible, that coupling of the sun gear 12 to the planet carrier 10 is done by means of a friction clutch and coupling the sun gear 12 to the housing 4 of the gearbox 2 is done by a form fit clutch. Moreover, it is possible that both coupling of the sun gear 12 to the planet carrier 10 and coupling the sun gear 12 to the housing 4 of the gearbox 2 is done by form fit clutches or friction clutches.

The first gear can be used when the vehicle 26 drives off under heavy conditions, e.g. uphill or out of mud. To keep the technical effort for the gear drive 1 as low as possible, the first gear wheel toothings, which are engaged and relatively rotate to each other only in first gear (or the first switching state), are designed for a lower lifetime than other, second gear wheel toothings of the gearbox 2.

In the example above, in first gear, toothings A and B are engaged and rotate relative to each other, toothings C and D are engaged and rotate relative to each other and toothings D and E are engaged and rotate relatively to each other.

In second gear, only toothings A and B are engaged and rotate relative to each other, whereas toothings C and D as well as D and E do not rotate relatively to each other.

Accordingly, the first gear wheel toothings, which are engaged and relatively rotate to each other only in first gear, are the toothings C and D as well as D and E, whereas second gear wheel toothings are the toothings A and B. As proposed, first gear wheel toothings C, D and E are designed for a lower lifetime than second gear wheel toothings A and B. Preferably, the first gear wheel toothings C, D and E are designed for a lifetime of less than 50 operating hours, whereas the second gear wheel toothings A and B are designed for a substantially longer time (typically > 2000 operating hours).

In another advantageous embodiment, the first gear wheel toothings C, D and E can be straight toothed and the second gear wheel toothings A and B can be helical toothed. Accordingly, the production of the first gear wheel toothings C, D and E is technically less complex and cheaper.

In yet another advantageous embodiment, first gear wheels with a first gear wheel toothing C, D and E, which only rotate relatively to each other in first gear, are supported by friction bearings and other, second gear wheels of the gearbox 2 are supported by rolling bearings. For the example shown in Fig. 1 this means that the ring gear 9, planet gears 11 and the sun gear 12 are supported by friction bearings. The pinion 9 and the bushing 13 in contrast are supported by roller bearings. In detail, the pinion 9 is supported by the roller bearings 5, 6 and 19 via the input shaft 7 and the rotor shaft 20. Support of the bushing 13 is not shown in Fig. 1. Because there is no relative rotation between the ring gear 9, the planet carrier 10, the planet gears 11 and the sun gear 12 in second gear, friction bearings are considered to be sufficient for lifetime of the vehicle 26.

To further reduce technical complexity of the gear drive 1, the two-speed gearbox 2 preferably is non-synchronized. In addition, in yet another advantageous embodiment, the first gear can only be engaged when the electric motor 3 is stopped.

It should be noted that although the aforementioned measures and preferred embodiments of the invention (e.g. reduced lifetime of first gearwheel toothings C, D and E, straight toothed first gear wheel toothings C, D and E and support of first gear wheels by friction bearings) are advantageous solutions, they are not necessarily linked to a planetary gear but other gears may be used in this context as well, e.g. two-shaft gearboxes.

Further, it is noted that the invention is not limited to the embodiments disclosed hereinbefore, but combinations of the different variants are possible. In reality, the gear drive 1 and the electric vehicle 26 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1: electric gear drive
- 2: gearbox
- 3: electric motor
- 4: housing of gearbox
- 5: bearing
- 6: bearing
- 7: input shaft
- 8: pinion
- 9: ring gear
- 10: planet carrier
- 11: planet gear
- 12: sun gear
- 13: bushing
- 14: friction pad
- 15: housing of electric motor
- 16: stator
- 17: stator lamination stack
- 18: stator winding
- 19: bearing
- 20: rotor shaft
- 21: rotor
- 22: rotor lamination stack
- 23: rotor magnet
- 24: position indicator
- 25: cap
- 26: electric vehicle
- 27: side shaft
- 28: wheel
- A..E: toothing
- F: form fit clutch

## Claims

1. Electric gear drive (1), comprising a two-speed gearbox (2) and an electric motor (3) coupled to a gear input of the gearbox (2), wherein
- the gearbox (2) provides a first transmission ratio between the gear input and a gear output of the gearbox (2) in a first gear and a second transmission ratio between the gear input and the gear output in a second gear, wherein
- provided the same rotation speed at the gear input, the first transmission ratio provides a lower rotation speed at the gear output than the second transmission ratio,
**characterized in that**
first gear wheel toothings (C, D, E), which are engaged and relatively rotate to each other only in the first gear, are designed for a lower lifetime than other, second gear wheel toothings (A, B) of the gearbox (2).

2. Electric gear drive (1) as claimed in claim 1, **characterized in that** the first gear wheel toothings (C, D, E) are designed for a lifetime of less than 50 operating hours.

3. Electric gear drive (1) as claimed in claim 1 or 2, **characterized in that** the first gear wheel toothings (C, D, E) are straight toothed and the second gear wheel toothings (A, B) are helical toothed.

4. Electric gear drive (1) as claimed in any one of claims 1 to 3, **characterized in that** first gear wheels with a first gear wheel toothing (C, D, E), which only rotate relatively to each other in first gear, are supported by friction bearings and other, second gear wheels of the gearbox (2) are supported by rolling bearings.

5. Electric gear drive (1) as claimed in any one of claims 1 to 4, **characterized in that** the two-speed gearbox (2) is non-synchronized.

6. Electric gear drive (1) as claimed in any one of claims 1 to 5, **characterized in that** the first gear can only be engaged when the electric motor (3) is stopped.

7. Electric gear drive (1) as claimed in any one of claims 1 to 6, **characterized in that** the gearbox (2) comprises a planetary gear.

8. Electric gear drive (1) as claimed in claim 7, **characterized in that**
- a pinion driven by the electric motor (3) engages with an outer toothing (A) of a ring gear (9) of the planetary gear,
- an output of the gearbox (2) is driven by a planet carrier (10) of the planetary gear,
- planet gears (11) rotatably mounted on the planet carrier (10) engage with an inner toothing (B) of the ring gear (9) and a sun gear (12) of the planetary gear, and
- switching means enable rotation of planet gears (11) around their axes in the first gear and interlocks the sun gear (12), the planet gears (11) and the ring gear (9) in second gear.

9. Electric gear drive (1) as claimed in claim 8, **characterized in that** the switching means comprise a form fit clutch (F) coupling or decoupling the sun gear (12) to the planet carrier (10) and a friction clutch coupling or decoupling the sun gear (12) to the housing (4) of the gearbox (2), wherein the friction clutch is engaged and the form fit clutch (F) is disengaged in the first gear and wherein the friction clutch is disengaged and the form fit clutch (F) is engaged in the second gear.

10. Electric gear drive (1) as claimed in claim 9, **characterized in that** the form fit clutch (F) is embodied as a dog clutch or as a combination of a spline shaft with a movable spline ring.

11. Electric gear drive (1) as claimed in any one of claims 7 to 10, **characterized in that** planet carrier (10) of the planetary gear is fixed to a pinion which engages with a differential gear.

12. Vehicle (26) having at least two axles, at least one of which is driven, **characterized in that** said drive is provided at least partially or intermittently by the electric gear drive (1) according to any one of claims 1 to 11.
